# EUROPEAN PATENT SPECIFICATION

(11) **EP 1 460 824 B1**
(45) Date of publication and mention of the grant of the patent: **02.06.2010**
(21) Application number: 04006270.5
(22) Date of filing: 16.03.2004
(51) Int. Cl.: H04M 1/725, H04M 3/42

(54) **Tone information generation in a telecommunication system**
Erzeugung einer Toninformation in einem Telekommunikationssystem
Génération d'une information de tonalité dans un système de télécommunication

(30) Priority: 18.03.2003 JP 2003074169
(43) Date of publication of application: 22.09.2004
(73) Proprietor: NTT DoCoMo, Inc., Tokyo 100-6150 (JP)
(72) Inventor: Urata, Yasuhiro, Int. Prop. Dpt., NTT DoCoMo, Inc., Chiyoda-ku, Tokyo 100-6150 (JP); Sano, Takayasu, Int. Prop. Dpt.,NTT DoCoMo, Inc., Chiyoda-kuo, Tokyo 100-6150 (JP); II, Hidekazu, Int. Prop. Dpt., NTT DoCoMo, Inc., Chiyoda-ku, Tokyo 100-6150 (JP)
(74) Representative: Viering, Jentschura & Partner

(56) References cited:
- WO-A-00/49793
- KR-A- 20020 056 833
- KR-A- 20020 097 075
- US-A1- 2003 063 721

## Description

### BACKGROUND OF THE INVENTION

### Field of the Invention

The present invention relates to a tone information providing system.

### Related Background Art

When calling a party from a communication terminal (such as landline phone, mobile phone, facsimile communication unit and so forth, hereinafter same) capable of generating a tone in accordance with the information sent through a communication network to another communication terminal, a tone such as a dial tone (DT), ring back tone (RBT), or busy tone (BT) is output from the receiving section of a communication terminal of a calling source in accordance with the phase of the calling operation. Each of these tones is output by converting an electrical signal sent from a switchboard through a communication network into a tone. Therefore, these tones have been previously decided. However, the art disclosed in the patent document (Japanese Patent Laid-Open No. 2002-33801) is known as an art capable of setting a DT, RBT, or BT to an optional tone.
WO 00/49793 discloses an advertising method by using a ring-back tone. A predetermined advertisement message stored in an advertisement memory may be sent to the sender's telephone set.

### SUMMARY OF THE INVENTION

In the case of the conventional art disclosed in the above patent document, an electrical signal is converted into a tone set by a calling party in the communication terminal of the calling party. Therefore, it is impossible that a called party sets his (or her) favorite music and sends the music to a calling party as an RBT.

Therefore, it is a problem of the present invention to provide a system allowing a called party to set the RBT of a calling party.

To solve the above problem, a tone information providing system of the present invention comprises receiving means for receiving calling information being transmitted from a communication terminal used by a user and capable of generating a predetermined tone in accordance with the tone information sent through a communication network, and including calling-terminal specifying information for specifying the communication terminal and called-terminal specifying information for specifying a communication terminal of a destination (calling destination); tone information selecting means for selecting tone information corresponding to the called-terminal specifying information out of tone information stored in tone information storing means in which called-terminal specifying information and tone information are related each other and stored; transmitting means for transmitting the selected tone information to the communication terminal used by the user; and tone information recording means for relating the calling-terminal specifying information, the called-terminal specifying information and the tone information each other and storing these pieces of information in past-record information storing means.

According to a tone information providing system of the invention, tone information is selected in accordance with called-terminal specifying information included in calling information out of called-terminal specifying information and tone information related each other and stored in tone information storing means. Therefore, it is possible to provide the tone information set by a user of a communication terminal of a calling destination to a communication terminal used by a user. Moreover, because the calling-terminal specifying information, called-terminal specifying information and tone information are related each other and stored in past-record information storing means, it is possible to hold the information, for example, showing which tone information was used when having called which calling destination.

Moreover, it is preferable that a tone information providing system of the invention further comprises request receiving means for receiving a disclosure request being transmitted from an information communication terminal used by a user and including at least the calling-terminal specifying information; past-record selecting means for selecting the information corresponding to the calling-terminal specifying information and being stored in the past-record information storing means in accordance with the received disclosure request; and past-record transmitting means for transmitting the selected information to the information communication terminal. Because relevant information such as the tone information stored in the past-record information storing means is transmitted in accordance with the disclosure request transmitted from the information communication terminal used by the user, it is possible to know the tone information, for example, which was used when having called a specific calling destination.

Furthermore, in the case of a tone information providing system of the invention, it is also preferable that time information relating to the time when transmitting means has transmitted tone information is related to the calling-terminal specifying information, the called-terminal specifying information and the tone information, and that these pieces of information are stored in past-record information storing means. Because the time information is related to the information stored in the past-record information means, information retrieval can be made in accordance with the time when the transmitting means transmitted the tone information.

Furthermore, in the case of a tone information providing system of the invention, it is also preferable that the time information relating to the time when the transmitting means has transmitted tone information is included in disclosure request. Because the time information is included in the disclosure request, information retrieval can be made in accordance with the time when the transmitting means transmitted the tone information.

### BRIEF DESCRIPTION OF THE DRAWINGS

FIG. 1 is an illustration for explaining a tone information providing system which is an embodiment of the invention;
FIG. 2A is an illustration showing an example of the information stored in the tone information storing section in FIG. 1;
FIG. 2B is an illustration showing an example of the information stored in the tone information storing section in FIG. 1;
FIG. 3A is an illustration showing an example of the information stored in the past-record information storing section in FIG. 1; and
FIG. 3B is an illustration showing an example of the information stored in the past-record information storing section in FIG. 1.

### DESCRIPTION OF THE PREFERRED EMBODIMENTS

It is possible to easily understand the knowledge of the invention by referring to the accompanying drawings shown for only illustration and considering the following detailed description. Moreover, embodiments of the invention are described by referring to the accompanying drawings. When possible, the same portion will be provided with the same symbol to omit overlapping description.

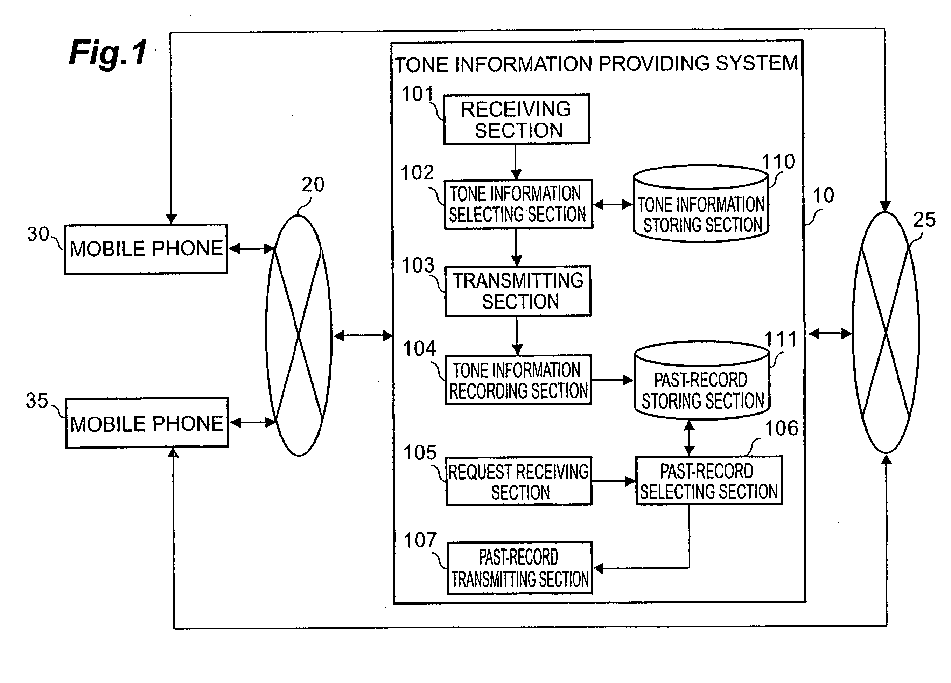

A tone information providing system which is an embodiment of the invention is described below by referring to FIG. 1. FIG. 1 is an illustration for explaining a tone information providing system 10. The tone information providing system 10 is constituted so that it can communicate with a mobile phone 30 (information communication terminal or communication terminal) and mobile phone 35 (information communication terminal or communication terminal) through a voice communication network 20 (communication network) and data communication network 25 each other. The mobile phone 30 is a mobile phone used by a user who utilizes the tone information providing system 10, which is constituted so that voice communication and data communication can be made. The mobile phone 35 is a mobile phone of other party who is called by the user of the mobile phone 30, which is constituted so that voice communication and data communication can be made.

The tone information providing system 10 is further described below. The tone information providing system 10 is physically constituted as a computer system (or an aggregate of computer systems) provided with a CPU (central processing unit), a memory, input units such as a mouse and keyboard, a display device such as a display, a storage unit such as a hard disk, and a communication device such as a modem.

The tone information providing system 10 includes, as functional components, a receiving section 101 (receiving means), a tone information selecting section 102 (tone information selecting means), a transmitting section 103 (transmitting means), a tone information recording section 104 (tone information recording means), a request receiving section 105 (request receiving means), a past-record selecting section 106 (past-record selecting means), a past-record transmitting section 107 (past-record transmitting means), a tone information storing section 110 (tone information storing means), and a past-record information storing section 111 (past-record information storing means). Moreover, these components are described below in detail.

The receiving section 101 is a section for receiving the calling information transmitted from the mobile phone 30 and outputting the information to the tone information selecting section 102. More specifically, the calling information includes an addresser number (calling-terminal specifying information) which is the telephone number of the mobile phone 30 and an addressee number (called-terminal specifying information) which is the telephone number of the mobile phone 35. The calling information is information transmitted from the mobile phone 30 to the voice communication network 20 upon calling, which is then transmitted to the tone information providing system 10 by the voice communication network 20.

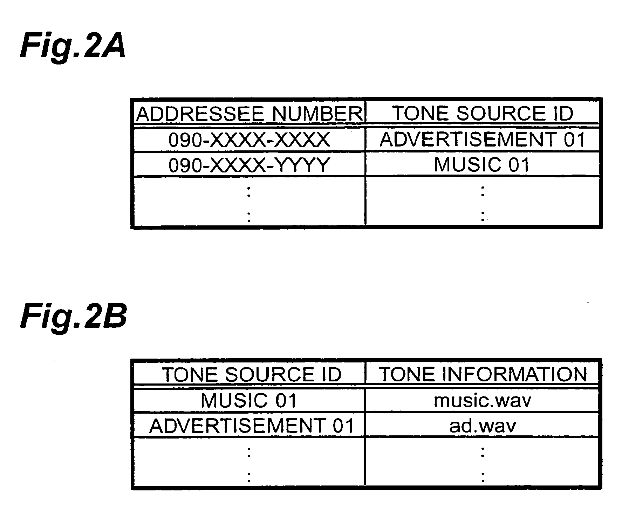

The tone information selecting section 102 is a section for selecting the tone information corresponding to the calling information output from the receiving section 101 out of the tone information stored in the tone information storing section 110 and outputting the selected information to the transmitting section 104. In this case, examples of the information stored in the tone information storing section 110 are described below by referring to FIGs. 2A and 2B. According to the example shown in FIG. 2A, an "addressee number (called-terminal specifying information)" and a "tone source ID" are related each other and stored. The "addressee number" is the information serving as a key for specifying the "tone source ID" corresponding to the "addressee number" when a telephone number corresponding to the "addressee number" is called. The "tone source ID" is the information for specifying the tone information to be supplied to the mobile phone 30. As shown in FIG. 2B, the "tone source ID" and "tone information" are related each other and stored in the tone information storing section 110.

In FIG. 2A, a number "090-XXXX-XXXX" stored as an addressee number is the telephone number of the mobile phone 30 and a number "090-XXXX-YYYY" is the telephone number of the mobile phone 35. Therefore, when a user of the mobile phone 30 calls the number "090-XXXX-YYYY" (that is, calls the mobile phone 35), the tone source ID of "music 01" is specified in accordance with the information table shown in FIG. 2A and the tone information of "music.wav" is specified in accordance with the information table shown in FIG. 2B. The information selecting section 102 selects the tone information of "music.wav" and outputs the tone information to the transmitting section 103 together with the tone source ID "music 01" of the tone information, addresser number "090-XXXX-XXXX", and addressee number "090-XXXX-YYYY."

The transmitting section 103 is a section for transmitting the tone information selected by the tone information selecting section 102 to the mobile phone 30. Moreover, the transmitting section 103 outputs the tone source ID of "music 01", addresser number "090-XXXX-XXXX", and addressee number "090-XXXX-YYYY" to the tone information recording section 104. More specifically, when "music.wav" is output as tone information and "090-XXXX-XXXX" is output as a telephone number, the transmitting section 104 transmits the tone information of "music.wav" to the voice communication network 20 together with the telephone number "090-XXXX-XXXX" and the tone information "music.wav" is transmitted to the mobile phone 30 specified by the telephone number "090-XXXX-XXXX" from the tone communication network 20. The voice communication network 20 continuously transmits the tone information "music.wav" until the mobile phone 30 establishes a call connection and stops the transmission when the call connection is established. The mobile phone 30 generates a predetermined tone as a RBT (ring back tone, call output tone).

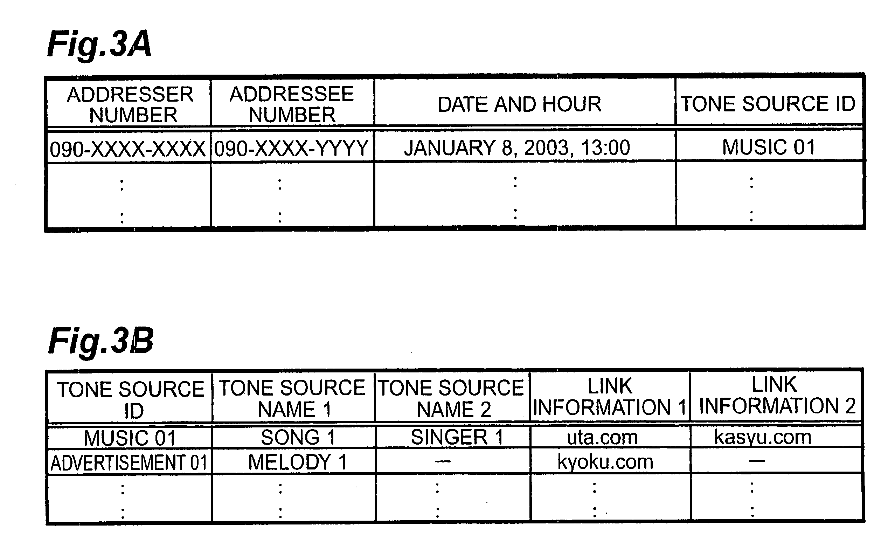

The tone information recording section 104 relates the tone source ID of "music 01", the addresser number "090-XXXX-XXXX" and addressee number "090-XXXX-YYYY" to store them in the past-record information storing section 111. FIGS. 3A and 3B show examples of the information stored in the past-record information storing section 111. According to the example in FIG. 3A, an "addresser number", "addressee number", "date and hour" and "tone source ID" are related each other to be stored. In this case, the "addresser number", "addressee number" and "tone source ID" are pieces of information output from the transmitting section 103. As to "date and hour", the date and hour corresponding to the call is specified by the tone recording section 104 to be stored. The "date and hour" corresponds to the date and hour when the tone information providing system 10 received the calling information transmitted from the mobile phone 30.

In FIG. 3B, a "tone source ID", "tone source name 1", "tone source name 2", "link information 1" and "link information 2" are related each other and stored. The "tone source name 1" and "tone source name 2" are name information relating to the "tone source ID." For example, when the "tone source ID" is the "music 01", a "song 1" as a melody name has been stored in the "tone source name 1", and a "singer 1" as a singer name has been stored in the "tone source name 2." The "link information 1" and "link information 2" are pieces of information for respectively specifying a link destination on the web relating to the "tone source ID."

The request receiving section 105 receives a disclosure request transmitted from the mobile phone 30 used by a user and including at least the telephone number of the mobile phone 30. The disclosure request may include the information (time information) for specifying the date and hour talked by a user through the mobile phone 30. The request receiving section 105 outputs the disclosure request to the past-record selecting section 106.

The past-record selecting section 106 selects the information corresponding to the telephone number of the mobile phone 30 and stored in the past-record storing section in accordance with a disclosure request received and output by the request receiving section 105. The past-record selecting section 106 outputs the selected information to the past-record transmitting section 107. More specifically, when the telephone number included in the disclosure request is "090-XXXX-XXXX", the section 106 selects "090-XXXX-YYYY" as a "addressee number" and "January 8, 2003, 13:00" as "date and hour" respectively in accordance with the information table exemplified in FIG. 3A, and selects the "song 1" as the "tone source 1", "singer 1" as the "tone source name 2", "uta.com" as the "link information 1" and "kasyu.com" as the "line information 2" respectively in accordance with the information table exemplified in FIG. 3B and outputs these data values to the past-record information transmitting section 107. Moreover, the past-record selecting section 106 may select one tone source ID out of a plurality of tone source IDs serving as prospects in accordance with the time information included in the disclosure request.

The past-record transmitting section 107 transmits the information selected and output by the past-record selecting section 106 to the mobile phone 30. According to the previously described example, the past-record transmitting section 107 transmits "090-XXXX-YYYY" as the "addressee number", "January 8, 2003, 13:00" as the "date and hour", "song 1" as the "tone source name 1", "singer 1" as the "tone source name 2", "uta.com" as the "link information" and "kasyu.com" as the "link information 2" respectively to the mobile phone 30. The mobile phone 30 displays these received pieces of information on a display, and a user can confirm these pieces of information.

Though this embodiment is constituted as the tone information providing system 10 as described above, it is also possible to disperse respective functional sections and stored pieces of information. For example, the tone information shown in FIG. 2B may be stored in a server system such as a tone source server. In this case, a plurality of tone source servers may be set or a plurality of pieces of tone information may be managed by classifying them and introducing management numbers such as tone source box numbers. Moreover, when storing tone information in a tone source server, the link information between a tone source ID and tone information may be used. In this case, a server system such as a portal server for storing link information to tone information may be introduced. A tone source ID and link information are related each other and stored in the portal server. When a tone source ID is specified, tone information is specified in accordance with the link information corresponding to the specified tone source ID.

In this embodiment, entry information and reference information are transmitted from the mobile phone 30. However, entry information and reference information may be transmitted from another information communication terminal (such as a personal computer).

According to this embodiment, the tone information selecting section 102 selects tone information in accordance with an addressee number included in calling information out of the addressee numbers and tone information related each other and stored in the tone information storing section 110. Therefore, it is possible to provide the tone information set by the user of the mobile phone 35 serving as a communication terminal of a calling destination to the mobile phone 30 used by another user. Moreover, because an addresser number, addressee number, and tone information are related each other and stored in the past-record storing section 111, it is possible to hold the information showing the tone information used when calling the mobile phone 35.

Moreover, in this embodiment, the information relating to a disclosure request such as a tone source name and link information stored in the past-record storing section 111 are transmitted in accordance with the disclosure request transmitted from the mobile phone 30 used by a user. Therefore it is possible to know the tone source name and link information used when calling the mobile phone 35.

## Claims

1. A tone information providing system (10) comprising:
• receiving means (101) for receiving calling information being transmitted from a communication terminal (30, 35) used by a user and capable of generating a predetermined tone in accordance with the tone information sent through a communication network (20), and including calling-terminal specifying information for specifying the communication terminal (30) and called-terminal specifying information for specifying a communication terminal (35) of a destination;
• tone information selecting means (102) for selecting tone information corresponding to the called-terminal specifying information out of tone information stored in tone information storing means (102) in which called-terminal specifying information and tone information are related to each other and stored;
• transmitting means (103) for transmitting said selected tone information to the communication terminal (30) used by the user; and
• tone information recording means (104) for relating the calling-terminal specifying information, the called-terminal specifying information and the tone information to each other and storing these pieces of information in past-record information storing means (111).

2. The tone information providing system (10) according to claim 1, further comprising:
• request receiving means (105) for receiving a disclosure request being transmitted from the information communication terminal (30) used by the user and including at least the calling-terminal specifying information;
• past-record selecting means (106) for selecting information corresponding to the calling-terminal specifying information and being stored in the past-record storing means in accordance with said received disclosure request; and
• past-record transmitting means (107) for transmitting said selected information to the information communication terminal (30).

3. The tone information providing system (10) according to claim 1,
wherein time information relating to the time when the transmitting means (103) has transmitted the tone information is related to the calling-terminal specifying information, the called-terminal specifying information and the tone information, and these pieces of information are stored in the past-record information storing means (106).

4. The tone information providing system (10) according to claim 2,
wherein the disclosure request includes time information relating to the time when the transmitting means has transmitted the tone information.

## Patentansprüche

1. Ton-Information-Bereitstellungs-System (10) aufweisend:
• Empfangs-Mittel (101) zum Empfangen von Anrufer-Information übertragen werdend von einem Kommunikations-Endgerät (30, 35) benutzt von einem Benutzer und geeignet zum Erzeugen eines vorgegebenen Tones gemäß der Ton-Information, gesendet durch ein Kommunikations-Netzwerk (20), und enthaltend Anrufer-Endgerät spezifizierende Information zum Spezifizieren des Kommunikations-Endgeräts (30) und Anruf-Endgerät spezifizierende Information zum Spezifizieren eines Kommunikations-Endgeräts (35) eines Ziels;
• Ton-Information-Auswahl-Mittel (102) zum Auswählen von Ton-Information korrespondierend mit der Anruf-Endgerät spezifizierenden Information aus der Ton-Information gespeichert in einem Ton-Information-Speicher-Mittel (102) in welchem Anruf-Endgerät spezifizierende Information und Ton-Information miteinander in Beziehung gebracht und gespeichert werden;
• übertragungs-Mittel (103) zum Übertragen der ausgewählten Ton-Information zu dem von dem Benutzer benutzten Kommunikations-Endgerät (30); und
• Ton-Information-Aufzeichnungs-Mittel (104) zum miteinander in Beziehung bringen der Anrufer-Endgerät spezifizierenden Information, der Anruf-Endgerät spezifizierenden Information und der Ton-Information, und Speichern dieser Informationsstücke in einem vergangene-Aufzeichnung-Information-Speicher-Mittel (111).

2. Ton-Information-Bereitstellungs-System (10) gemäß Anspruch 1, ferner aufweisend:
• Anforderungs-Empfangs-Mittel (105) zum Empfangen einer Bekanntgabe-Anforderung übertragen werdend von dem Information-Kommunikations-Endgerät (30) benutzt von dem Benutzer und enthaltend mindestens die Anrufer-Endgerät spezifizierende Information;
• Vergangene-Aufzeichnung-Auswahl-Mittel (106) zum Auswählen von Information korrespondierend mit der Anrufer-Endgerät spezifizierenden Information und gespeichert werdend in dem Vergangene-Aufzeichnung-Speicher-Mittel gemäß der empfangenen Bekanntgabe-Anforderung; und
• Vergangene-Aufzeichnung-Übertragungs-Mittel (107) zum Übertragen der ausgewählten Information zu dem Informations-Kommunikations-Endgerät (30).

3. Ton-Information-Bereitstellungs-System (10) gemäß Anspruch 1,
wobei Zeit-Information bezogen auf die Zeit, zu der das Übertragungs-Mittel (103) die Ton-Information übertragen hat, in Beziehung gesetzt wird zu der Anrufer-Endgerät spezifizierenden Information, der Anruf-Endgerät spezifizierenden Information und der Ton-Information, und diese Informationsstücke in dem Vergangene-Aufzeichnung-Information-Speicher-Mittel (106) gespeichert werden.

4. Ton-Information-Bereitstellungs-System (10) gemäß Anspruch 2,
wobei die Bekanntgabe-Anforderung Zeit-Information bezogen auf die Zeit, zu der das Übertragungs-Mittel die Zeit-Information übertragen hat, enthält.

## Revendications

1. Système de fourniture d'informations de tonalité (10) comprenant :
• des moyens de réception (101) pour recevoir des informations d'appel émises par un terminal de communication (30, 35) utilisé par un utilisateur et capable de générer une tonalité prédéterminée conformément aux informations de tonalité envoyées par un réseau de communication (20), et comprenant des informations de spécification de terminal d'appel afin de spécifier le terminal de communication (30) et des informations de spécification de terminal appelé afin de spécifier un terminal de communication (35) d'une destination ;
• des moyens de sélection d'informations de tonalité (102) pour sélectionner des informations de tonalité correspondant aux informations de spécification de terminal appelé parmi les informations de tonalité stockées dans les moyens de stockage d'informations de tonalité (102), dans lesquels les informations de spécification de terminal appelé et les informations de tonalité sont rapportées les unes aux autres et stockées ;
• des moyens de transmission (103) pour transmettre lesdites informations de tonalité au terminal de communication (30) utilisé par utilisateur ; et
• des moyens d'enregistrement d'informations de tonalité (104) pour rapporter les informations de spécification de terminal d'appel, les informations de spécification de terminal appelé et les informations de tonalité les unes aux autres et stocker ces informations dans des moyens de stockage d'informations (111) enregistrées dans le passé.

2. Système de fourniture d'informations de tonalité (10) selon la revendication 1, comprenant en outre :
• des moyens de réception de demande (105) pour recevoir une demande de divulgation transmise par le terminal de communication d'informations (30) utilisé par l'utilisateur et comprenant au moins les informations de spécification de terminal d'appel ;
• des moyens de sélection d'enregistrements passés (106) pour sélectionner des informations correspondant aux informations de spécification de terminal d'appel et stockées dans les moyens de stockage d'enregistrements passés selon ladite demande de divulgation reçue ; et
• des moyens de transmission d'enregistrements passés (107) pour transmettre lesdites informations sélectionnées au terminal de communication d'informations (30).

3. Système de fourniture d'informations de tonalité (10) selon la revendication 1,
dans lequel les informations temporelles se rapportant au moment où les moyens de transmission (103) ont transmis les informations de tonalité concernent les informations de spécification de terminal d'appel, les informations de spécification de terminal appelé et les informations de tonalité, et ces informations sont stockées dans les moyens de stockage d'informations d'enregistrements passés (106).

4. Système de fourniture d'informations de tonalité (10) selon la revendication 2,
dans lequel la demande de divulgation comprend des informations temporelles concernant le moment où les moyens de transmission ont transmis les informations de tonalité.
